# EUROPEAN PATENT APPLICATION

(11) **EP 1 296 130 A1**
(43) Date of publication of application: **26.03.2003**
(21) Application number: 01945748.0
(22) Date of filing: 02.07.2001
(51) Int. Cl.: G01N 21/72

(54) **HYDROGEN FLAME LUMINOSITY ANALYZER FOR THIN-LAYER CHROMATOGRAPH, AND HYDROGEN FLAME LUMINOSITY ANALYZING METHOD**

(30) Priority: 30.06.2000 JP 2000198938
(71) Applicant: IATRON LABORATORIES, INC., Chiyoda-ku Tokyo 101-0031 (JP)
(72) Inventor: OGASAWARA, Minoru, c/o IATRON LABORATORIES, INC., Tokyo 101-1131 (JP); SURUTA, Kyoko, c/o IATRON LABORATORIES, INC., Tokyo 101-0031 (JP)
(74) Representative: VOSSIUS & PARTNER
(86) International application number: JP0105699
(87) International publication number: WO02003054

(57) **Abstract**

A hydrogen-flame photometric analyzer for a thin-layer chromatograph, comprising
(1) a hydrogen burner capable of forming a hydrogen flame;
(2) a moving means capable of moving a thin-layer chromatography element and/or the hydrogen burner at a predetermined speed so that analytes separated on a chromatography carrier of the thin-layer chromatography element may be sequentially burned by the hydrogen flame formed by the hydrogen burner;
(3) a spectroscopic means capable of resolving a light emitted from the hydrogen flame; and
(4) a light-analyzing means capable of analyzing an intensity of a light resolved by the spectroscopic means is disclosed.

A method for analyzing a hydrogen-flame photometry for a thin-layer chromatograph, comprising the steps of:
sequentially burning analytes separated on a chromatography carrier of a thin-layer chromatography element by a hydrogen flame formed by a hydrogen burner, by moving the thin-layer chromatography element and/or the hydrogen burner at a predetermined speed; and
analyzing an intensity of a light emitted from the hydrogen flame, at a particular wavelength, is also disclosed.

According to the hydrogen-flame photometric analyzer and the method for analyzing a hydrogen-flame photometry, hetero-elements can be stably, accurately, and specifically analyzed.

## Description

### TECHNICAL FIELD

The present invention relates to a hydrogen-flame photometric analyzer for a thin-layer chromatograph and a method for analyzing a hydrogen-flame photometry for a thin-layer chromatograph. According to the present invention, in an analyzing technique for a thin-layer chromatograph using a bar-like thin-layer chromatography element as a separating means for a sample to be analyzed, and a hydrogen flame as a means of detecting the separated analytes, the intensities of light emitted from the hydrogen flame are analyzed at particular wavelengths by a photometric analyzer, whereby a compound containing a hetero element, such as a particular element (particularly, phosphorus or sulfur) can be selectively detected.

The term "analyze" as used herein includes a measurement for quantitatively or semi-quantitatively determining an amount of an analyte and a detection for judging a presence or absence of an analyte.

### BACKGROUND ART

Hitherto, a thin-layer chromatograph has been widely used wherein a sample to be analyzed is spotted on a thin-layer chromatography element prepared by forming a thin layer of fine particles of, for example, alumina, silica gel, or diatomaceous earth, on a surface of a quartz stick having a diameter of about 1 mm; a suitable mobile phase such as one of various organic solvents, water, acid, alkali, or a mixture thereof, is moved and developed by a capillary action to separate analytes (or analyte components); removing the mobile phase remaining on the thin-layer chromatography element by, for example, heating; and then analyzing analytes (or analyte components) by a hydrogen-flame ionization detector.

The hydrogen-flame ionization detector, also called a carbon detector, is extremely sensitive to general organic compounds and widely used. The sensitivity to general organic compounds is an advantage, but at the same time, a total lack of specificity is a disadvantage. For example, an actual sample to be analyzed is composed of various compounds and components. When the hydrogen-flame ionization detector having a sensitivity to general organic compounds is used, an accurate analysis cannot be carried out unless an object compound or component is completely separated from the sample. For example, when only a compound or a component containing a hetero element such as phosphorus or sulfur in a sample is to be analyzed, the compound or the component must be completely separated from other compounds or components. In some cases, the object compounds or components cannot be separated, if the sample contains amounts of many compounds or components other than the object compounds or components. Thus, the object compounds or components are buried among other compounds or components, and cannot be analyzed. Further, the hydrogen-flame ionization detector has a disadvantage in that, when the object compound or component to be analyzed contains a hetero element such as phosphorus, sulfur, or halogen, but does not contain many carbon atoms, the sensitivity is extremely lowered, and sometimes the object compound or component cannot be detected at all. Therefore, a detector capable of responding not only to carbon atoms but also, specifically, to hetero elements is greatly desired.

Hitherto, in the field of gas chromatography, various specific detectors have been developed and are widely used. Nevertheless, in the field of thin-layer chromatography, a detector which can specifically detect a hetero element and which can be put to practical use is not known, except for only one commercially available detector as mentioned below. This is because, in a gas chromatograph, a series of procedures from an introduction of analytes into a detector to a detection thereof is carried out in a continuous gasflow circuit, a sealed detector portion has a very simple structure, and thus various attempts may be easily made, whereas, in a thin-layer chromatograph, analytes separated and located in a one-dimensional space on a thin-layer chromatography element must be scanned and detected by a detector, a detector has a very complicated structure, and thus various attempts cannot be easily made.

Further, even if the same basic principles as those of a detector for a gas chromatograph are used, and various findings obtained in the detector for a gas chromatograph are applied to a thin-layer chromatograph without modification, success is not insured. For example, as apparent from a hydrogen-flame ionization detector disclosed in Japanese Examined Patent Publication (Kokoku) No. 5-4631 and Japanese Examined Patent Publication (Kokoku) No. 5-11905, where a detector for a gas chromatograph is applied without modification, the characteristics of the detectors are profoundly different from each other because the constitutional elements are different. Therefore, an ingenious originality is required to obtain a practical performance. Under those circumstances, in the field of thin-layer chromatography, a detector which can specifically detect a hetero element and may be put to practical use is not known, except only for one commercially available detector as mentioned below.

The only known commercially available detector is a thermal ionization detector, having a simple structure, for a thin-layer chromatograph. Nevertheless, this detector requires an unstable alkali source as an essential constitutional element. Namely, from an alkali source such as an alkali metal salt, the alkali metal is vaporized and consumed with time, and thus a response signal is lowered with time. Further, the reducing rate is very fast, and the detection results are not stable, and therefore, accurate results cannot be obtained from the thermal ionization detector.

As above, in the field of thin-layer chromatography, a detector which can specifically detect a hetero element such as phosphorus or sulfur and stably work in practical use was not known. Accordingly, an object of the present invention is to provide a hydrogen-flame photometric analyzer for a thin-layer chromatograph and a method for analyzing a hydrogen-flame photometry for a thin-layer chromatograph wherein the disadvantages in prior art are remedied, a hetero element such as phosphorus or sulfur can be specifically detected, and stable and accurate analyzing results can be obtained.

### DISCLOSURE OF INVENTION

According to the present invention, the above object can be achieved by a hydrogen-flame photometric analyzer for a thin-layer chromatograph, comprising
(1) a hydrogen burner capable of forming a hydrogen flame;
(2) a moving means capable of moving a thin-layer chromatography element and/or the hydrogen burner at a predetermined speed so that analytes separated on a chromatography carrier of the thin-layer chromatography element may be sequentially burned by the hydrogen flame formed by the hydrogen burner;
(3) a spectroscopic means capable of resolving a light emitted from the hydrogen flame; and
(4) a light-analyzing means capable of analyzing an intensity of a light resolved by the spectroscopic means.

The present invention also relates to a method for analyzing a hydrogen-flame photometry for a thin-layer chromatograph, comprising the steps of:
sequentially burning analytes separated on a chromatography carrier of a thin-layer chromatography element by a hydrogen flame formed by a hydrogen burner, by moving the thin-layer chromatography element and/or the hydrogen burner at a predetermined speed; and
analyzing an intensity of a light emitted from the hydrogen flame, at a particular wavelength.

### Brief Description of Drawings

Figure 1 schematically illustrates an analyzing principle of the hydrogen-flame photometric analyzer for a thin-layer chromatograph according to the present invention.
Figure 2 schematically illustrates another embodiment of the hydrogen-flame photometric analyzer for a thin-layer chromatograph according to the present invention.
Figure 3 is a thin-layer chromatogram showing the results obtained by analyzing a commercially available soybean lecithin preparation for a food additive by the hydrogen-flame photometric analyzer for thin-layer chromatograph according to the present invention.
Figure 4 is a thin-layer chromatogram showing the results obtained by analyzing a mixture of amino acids by the hydrogen-flame photometric analyzer for thin-layer chromatograph according to the present invention.

### BEST MODE FOR CARRYING OUT THE INVENTION

Typical embodiments of the present invention will be described in detail hereinafter, with reference to the drawings.

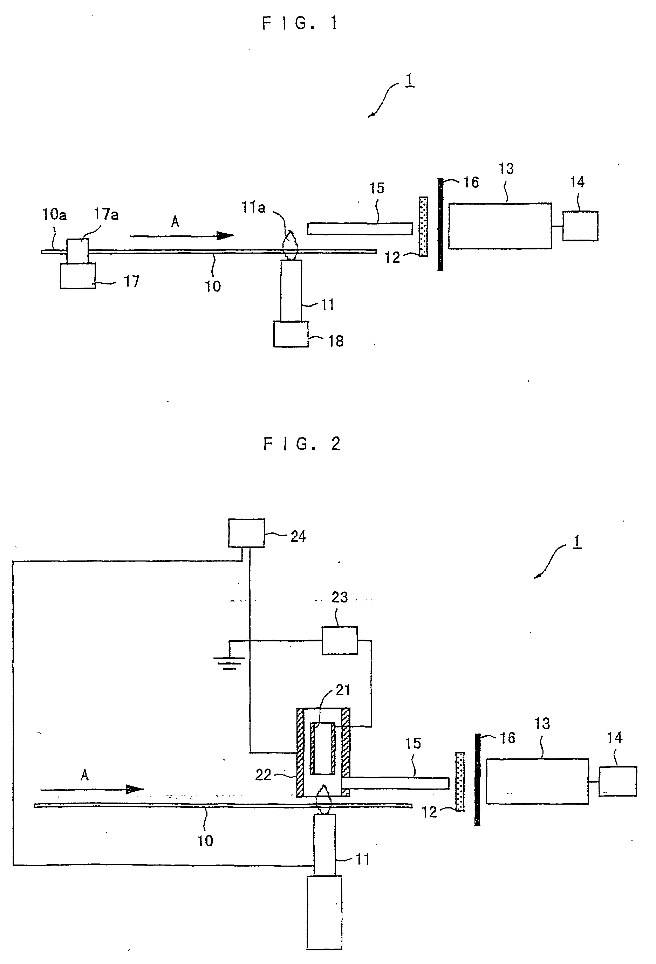

Figure 1 schematically illustrates an analyzing principle of the hydrogen-flame photometric analyzer for a thin-layer chromatograph according to the present invention.

The hydrogen-flame photometric analyzer 1 for a thin-layer chromatograph according to the present invention contains a hydrogen burner 11, a moving-means 17 for a thin-layer chromatography element 10, an optical filter 12, and a light analyzer 13.

A hydrogen gas and air are introduced into the hydrogen burner 11 while the flow rates thereof are accurately controlled, and a hydrogen flame 11a can be formed. The thin-layer chromatography element 10 is fixed at one edge 10a, or both edges thereof, by a suitable holder 17a of the moving-means 17 for the thin-layer chromatography element, namely, the thin-layer chromatography element-moving-means 17, and conveyed in a direction of the hydrogen flame 11a (a direction of an arrow A) at a predetermined velocity, preferably a constant velocity, whereby analytes separated on a chromatography carrier of the thin-layer chromatography element 10 can be sequentially burned by the hydrogen flame 11a. The moving-means for the thin-layer chromatography element may be a scanning table capable of moving while carrying the thin-layer chromatography element 10.

The optical filter 12 is a spectroscopic means which can transmit only a light having a particular wavelength in the light emitted from the hydrogen flame 11a. Further, the light analyzer 13 can analyze an intensity of a light.

In the hydrogen-flame photometric analyzer 1 for a thin-layer chromatograph according to the present invention, a light-guiding path 15 may be located between the hydrogen flame 11a formed by the hydrogen burner 11 and the optical filter 12. The light-guiding path 15 can take up light of the hydrogen flame generated by burning various analytes or components separated on the bar-like thin-layer chromatography element 10, and guide the light via the optical filter 12 to the light analyzer 13. If necessary, a recorder 14 and/or an indicating device (not shown) can be connected to the light analyzer 13.

If desired, a mechanical shutter 16 may be provided in the hydrogen-flame photometric analyzer 1 for a thin-layer chromatograph, to protect a light-receiving surface of the light analyzer 13. When the light analyzer 13 is open upon an exchange of the thin-layer chromatography element 10, or the like, and a natural light is incident thereon from outside, the mechanical shutter 16 can be closed to protect the light-receiving surface of the light analyzer 13. It is not necessary to provide the mechanical shutter 16 in an apparatus on which natural light is not frequently incident from outside.

The hydrogen burner 11 may be fixed on a suitable moving-means 18, and the hydrogen burner 11 alone may be moved along the fixed thin-layer chromatography element 10, or both the hydrogen burner 11 and the thin-layer chromatography element 10 may be moved, respectively. When the hydrogen burner 11 is moved, it is preferable to move the hydrogen burner 11, and at the same time, the optical filter 12, the light analyzer 13, and optionally, the light-guiding path 15, the mechanical shutter 16, and the recorder 14, by fixing them on the moving-means 18 or another moving means capable of synchronous movement.

The method for analyzing a hydrogen-flame photometry for a thin-layer chromatograph according to the present invention can be carried out in accordance with the following procedures, for example, using the hydrogen-flame photometric analyzer 1 as shown in Fig. 1 for a thin-layer chromatograph.

The bar-like thin-layer chromatography element 10, on which various compounds or components contained in a sample have been separated, is fixed on the moving-means 17 for the thin-layer chromatography element or the scanning table. Then, the hydrogen burner 11 is lighted to form the hydrogen flame 11a. While maintaining the flame 11a, the moving-means 17 for the thin-layer chromatography element is conveyed in a direction of the arrow A at a predetermined velocity, preferably a constant velocity, to pass the bar-like thin-layer chromatography element 10 through the hydrogen flame 11a. When the bar-like thin-layer chromatography element 10 is passed through the hydrogen flame 11a, various analytes or components separated thereon are sequentially burned, and intensities of light emitted from the hydrogen flame 11a are changed at individual wavelength-components thereof, dependent on a kind or an amount of the analytes or components to be analyzed. Then, the lights emitted from the hydrogen flame 11a are guided through the light-guiding path 15 to the optical filter 12, where a light having a desired wavelength is passed through and guided to the light analyzer 13. An intensity of the light can be analyzed and the result can be recorded in the recorder 14 or indicated by a suitable indicating device.

When a bar-like thin-layer chromatography element 10 is burned by the hydrogen flame 11a, plural intensities of light at particular wavelengths can be analyzed at the same time, by providing plural optical filters 12 having different transmission wavelengths, and guiding each light transmitted from the optical filters 12 to a light analyzer 13 equipped to each optical filter. Instead of plural optical filters 12, a prism may be provided to resolve the light into those having different wavelengths.

A shape of the thin-layer chromatography element which may be used in the hydrogen-flame photometric analyzer for a thin-layer chromatograph, or the method for analyzing a hydrogen-flame photometry for a thin-layer chromatograph according to the present invention, is not particularly limited so long as it is a bar - like shape, but for example, it may be a square pillar having a sectional shape of a regular square or a rectangle, or a cylinder having a sectional shape of a circle or an ellipse.

The size of the thin-layer chromatography element is not particularly limited but, for example, the element has a bar-like shape having a length of 3 to 30 cm and a width (or a diameter) of 0.5 to 5 mm. If the length is more than 30 cm, a movement and development of a mobile phase by a capillary action may become difficult and affect practical use. Further, if the width or the diameter is more than 5 mm, a heat capacity of the thin-layer chromatography element becomes too large, and some isolated components may remain unburned.

The thin-layer chromatography element is generally composed of a support and a chromatography carrier, that is, a thin-layer. An example of the support which may be used is a heat-resistant ceramic, such as silica glass, alumina, or zirconia. A material for the thin-layer material which may be used is, for example, silica gel, alumina, diatomaceous earth, or hydroxyapatite.

The thin-layer chromatography element-moving-means which may be used in the hydrogen-flame photometric analyzer for a thin-layer chromatograph according to the present invention is not particularly limited, so long as it can convey the bar-like thin-layer chromatography element in an axial direction at a predetermined velocity, preferably a constant velocity. For example, it can be a table such as a scanning table capable of mounting the thin-layer chromatography element on the surface thereof and conveying the thin-layer chromatography element in an axial direction thereof, or a chuck capable of fixing the thin-layer chromatography element at an edge or both edges thereof, and conveying the thin-layer chromatography element in an axial direction thereof. A driving means of the moving-means for the thin-layer chromatography element may be, for example, a DC motor, an AC motor, a linear motor, or a pulse motor. The driving means may also be used as a driving means for the hydrogen burner.

The spectroscopic means which may be used in the hydrogen-flame photometric analyzer for a thin-layer chromatograph according to the present invention can be appropriately selected dependent on wavelengths of emitted light of the object hetero elements. For example, an optical filter, such as a low-pass filter, a high-pass filter, or a band-pass filter, a prism or a diffraction grating may be used. It is preferable to use the optical filter such as the band-pass filter, as it is easy to handle and the cost is low.

For example, when phosphorus is burned, a strong light is emitted around 526 nm. Therefore, a band-pass filter of 521 to 531 nm can be used. Further, sulfur shows strong light in a wide range of wavelengths around 394 nm, and thus, a band-pass filter of 386 to 402 nm can be used.

The light-analyzing means which may be used in the hydrogen-flame photometric analyzer for a thin-layer chromatograph according to the present invention is, for example, a photomultiplier, a CCD (charge coupled device), or a high-sensitivity photodiode. A photomultiplier having a bialkali light-receiving surface is particularly preferred, because it has a high sensitivity and a low dark current.

In the embodiment as shown in Fig. 1, the light-guiding path 15 is used to guide the light emitted from the hydrogen flame 11a to the optical filter 12. However, it is not necessary to provide the light-guide in the hydrogen-flame photometric analyzer for a thin-layer chromatograph according to the present invention, as the light from the hydrogen flame can be directly resolved by the spectroscopic means. However, it is preferable to provide the light-guiding path 15 as shown in Fig. 1, for the following reasons

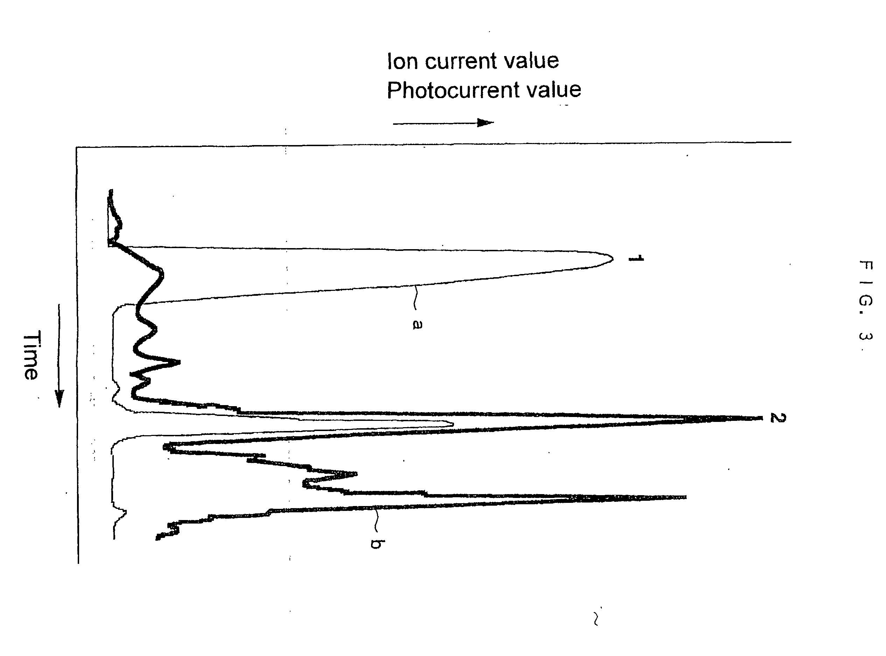

For example, in the hydrogen-flame photometric analyzer for a thin-layer chromatograph according to the present invention as used in the Example and shown in Fig. 2, i.e., a dual analyzer equipped with a hydrogen-flame ionization detector, constitutional elements such as electrodes are closely crowded around the hydrogen flame. Thus, it is difficult to place the spectroscopic means and the light-analyzing means around the hydrogen flame. That is, if the spectroscopic means and the light-analyzing means are located around the hydrogen flame, maintenance and checking becomes inconvenient. Conversely, a foldable and bendable light-guide may be used to guide the light from the hydrogen flame to the spectroscopic means, whereby the maintenance and checking becomes convenient, without forcefully placing the spectroscopic means and the light-analyzing means around the hydrogen flame where elements are already closely crowded.

Further, in an analyzer for a gas chromatograph disclosed in W. P. Cochrane, R. GreenHalgh, Chromatographia, Vol.9, No.6, June, 1976, page 260, a photomultiplier and a filter are separated from a heat source by transmitting the light from a flame in a burning room via an optical fiber to a photomultiplier, and thus an influence of heat is avoided. A similar effect can be expected in the present invention.

### EXAMPLES

The present invention now will be further illustrated by, but is by no means limited to, the following Examples.

### Example 1: Thin-layer chromatography of soybean lecithin preparation for a food additive

In this Example, an embodiment of the hydrogen-flame photometric analyzer for a thin-layer chromatograph according to the present invention as shown in Fig. 2 was used.

Fig. 2 schematically illustrates an embodiment of the hydrogen-flame photometric analyzer for a thin-layer chromatograph according to the present invention. The hydrogen-flame photometric analyzer 1 for a thin-layer chromatograph as shown in Fig. 2 is a dual analyzer also equipped with a hydrogen-flame ionization detector.

The hydrogen-flame photometric analyzer 1 for a thin-layer chromatograph as shown in Fig. 2 contains a hydrogen burner 11; a scanning table (not shown) as a moving-means for the thin-layer chromatography element; a light analyzer 13 capable of analyzing an intensity of a light; a recorder 14 capable of recording analyzed results (photocurrent values) obtained by the light analyzer 13; a light-guiding path 15 capable of taking light of the hydrogen flame formed by burning various analytes separated on the bar-like thin-layer chromatography element 10, and transmitting the light to the light analyzer 13; an optical filter 12 as the spectroscopic means; and a mechanical shutter 16 for protecting a light-receiving surface of the light analyzer 13.

To carry out a hydrogen-flame ionization analysis, the hydrogen-flame photometric analyzer 1 as shown in Fig. 2 further contains an electrode 21 to which a negative high voltage is applied by a high-voltage source 23; a recorder 24 capable of recording an ion current flowing between the electrode 21 and the hydrogen burner 11 as a signal of the hydrogen-flame ionization detector; and a third electrode 22. The third electrode 22 is earthed, whereby adventitious noise can be prevented and a distribution of an electric potential of the hydrogen flame can be controlled.

Lecithin has a phosphoric diester per molecule, and phosphorus shows a strong emission around 526 nm. A band-pass filter of 526 nm was used as an optical filter of the spectroscopic means to analyze the emission of the phosphorus. Further, a melted-quartz optical fiber having a diameter of 3 mm and a length of 30 cm was used as the light-guiding path 15. As the photometric analyzing means 13, a photomultiplier H5783 (Hamamatsu Photonics) was used. As the bar-like thin-layer chromatography element 10, Chromarod S-III (length = 15 cm, diameter = 1.1 mm: Iatron) having a silica gel thin-layer was used. As a sample, a commercially available soybean lecithin preparation for a food additive was used.

The sample to be analyzed was dissolved in a chloroform/methanol mixture (chloroform : methanol = 2:1) to a concentration of 20mg/mL, and 1 µL of the resulting solution was spotted on the bar-like thin-layer chromatography element 10. The bar-like thin-layer chromatography element 10 was developed with a mobile phase (chloroform : methanol : water = 40:20:2), and individual components were separated from the sample. Then, the bar-like thin-layer chromatography element 10 was charged for 3 minutes in a dryer heated at 110 °C, to remove the mobile phase remaining on the bar-like thin-layer chromatography element 10. The bar-like thin-layer chromatography element 10 was fixed on the moving means of the hydrogen-flame photometric analyzer 1 for a thin-layer chromatograph, and simultaneous measurements were carried out by the hydrogen-flame ionization detector and the hydrogen-flame photometric analyzer 1, under the conditions that a flow rate of hydrogen in the burner 11 was 160 mL/min, a flow rate of air was 500 mL/min, and a moving velocity of the moving means of the bar-like thin-layer chromatography element 10 was 120 mm/30 sec.

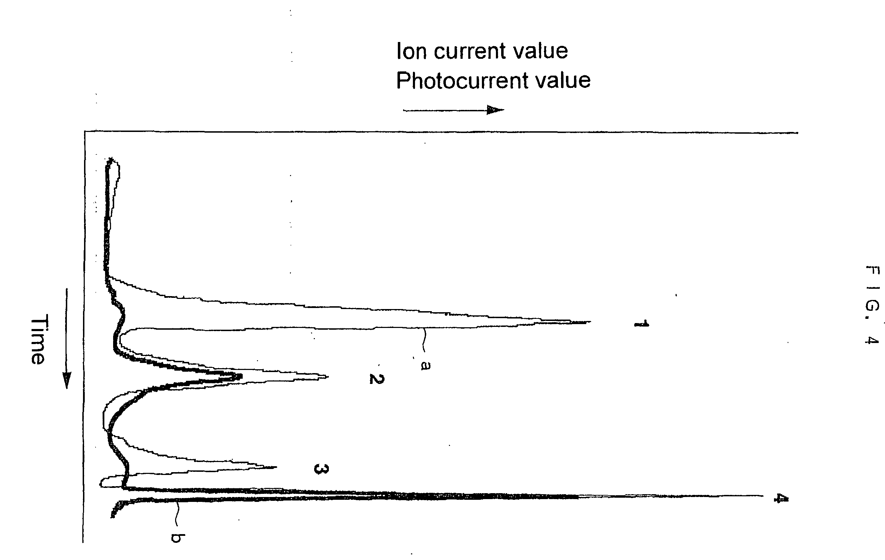

The resulting thin-layer chromatogram is shown in Fig. 3. In Fig. 3, a thin curve a is a chromatogram of the hydrogen-flame ionization detector, and a thick curve b is a chromatogram of the hydrogen-flame photometric analyzer. In Fig. 3, both chromatograms are superimposed by adjusting them so as to practically equalize an analytes-amount expressed by a height (ordinate) of an ion current value with an analytes-amount expressed by a height (ordinate) of a photocurrent value. The peak 1 is a neutral fat, and the peak 2 is lecithin. The peak 1 does not contain phosphorus, and a high peak emerges in the hydrogen-flame ionization detector, whereas very little peak is detected in the hydrogen-flame photometric analyzer. The peak 2 is lecithin and contains phosphorus, the peaks emerge in both the hydrogen-flame ionization detector and the hydrogen-flame photometric analyzer. Further, the hydrogen-flame photometric analyzer revealed the presence of peaks which did not emerge in the hydrogen-flame ionization detector, between the peak 1 and peak 2, and after the peak 2. In particular, the very high peak after the peak 2 appears to be a lecithin decomposition having few carbon atoms or an inorganic phosphorus compound, and the content thereof is considered large. However, the conventional hydrogen-flame ionization detector was not able to detect it.

### Example 2: Thin-layer chromatography of a mixture of amino acids

In this Example, the hydrogen-flame photometric analyzer 1 for a thin-layer chromatograph according to the present invention as shown in Fig. 2 was used. Some amino acids contain sulfur, and sulfur shows a strong emission around 394 nm. A band-pass filter of 394 nm was used as an optical filter of the spectroscopic means to analyze the emission of the sulfur. Other conditions used were the same as those in Example 1.

As the analytes, a mixture of amino acids prepared by the inventors, i.e., a mixture of tryptophan, methionine, glutamic acid, and homocysteine, was used and dissolved in a diluted aqueous ammonia to a concentration of 20 mg/mL, and 1 µL of the mixture was spotted on the bar-like thin-layer chromatography element 10. The bar-like thin-layer chromatography element 10 was developed with a mobile phase (acetonitrile : water : 25% ammonia = 55:15:0.86). Then, the bar-like thin-layer chromatography element 10 was charged for 3 minutes in a dryer heated at 110 °C to remove the mobile phase remaining on the bar-like thin-layer chromatography element 10. The bar-like thin-layer chromatography element 10 was fixed on the moving means of the hydrogen-flame photometric analyzer 1 for a thin-layer chromatograph. Simultaneous measurements were carried out by the hydrogen-flame ionization detector and the hydrogen-flame photometric analyzer 1, under the conditions that a flow rate of hydrogen in the burner 11 was 160 mL/min, a flow rate of air was 500 mL/min, and a moving velocity of the moving means of the bar-like thin-layer chromatography element 10 was 120 mm/30 sec.

The resulting thin-layer chromatogram is shown in Fig. 4. In Fig. 4, a thin curve a is a chromatogram of the hydrogen-flame ionization detector, and a thick curve b is a chromatogram of the hydrogen-flame photometric analyzer. In Fig. 4, both chromatograms are superimposed by adjusting them so as to practically equalize an analytes-amount expressed by a height (ordinate) of an ion current value with an analytes-amount expressed by a height (ordinate) of a photocurrent value. The peak 1 is tryptophan, the peak 2 is methionine, the peak 3 is glutamic acid, and the peak 4 is homocysteine.

Of the four amino acids, the sulfur-containing amino acids are methionine of the peak 2, and homocysteine of the peak 4. The hydrogen-flame photometric analyzer was able to selectively detect the sulfur-containing amino acids.

### INDUSTRIAL APPLICABILITY

According to the present invention, hetero elements contained in individual compounds or components in a sample can be specifically analyzed, by burning individual compounds or components separated on a bar-like thin-layer chromatography element, and measuring the intensities of light from the hetero elements. Further, components unable to be analyzed by a hydrogen-flame ionization detector can be analyzed. Furthermore, a constitutional element consumed with time as in a thermal ionization analyzer is not required, and thus stable and accurate results can be obtained.

As above, the present invention is explained with reference to particular embodiments, but modifications and improvements obvious to those skilled in the art are included in the scope of the present invention.

## Claims

1. A hydrogen-flame photometric analyzer for a thin-layer chromatograph, comprising
(1) a hydrogen burner capable of forming a hydrogen flame;
(2) a moving means capable of moving a thin-layer chromatography element and/or the hydrogen burner at a predetermined speed so that analytes separated on a chromatography carrier of the thin-layer chromatography element may be sequentially burned by the hydrogen flame formed by the hydrogen burner;
(3) a spectroscopic means capable of resolving a light emitted from the hydrogen flame; and
(4) a light-analyzing means capable of analyzing an intensity of a light resolved by the spectroscopic means.

2. The hydrogen-flame photometric analyzer for a thin-layer chromatograph according to claim 1 further comprising a light-guide between the hydrogen flame formed by the hydrogen burner and the spectroscopic means.

3. The hydrogen-flame photometric analyzer for a thin-layer chromatograph according to claim 1 or 2 further comprising a mechanical shutter between the spectroscopic means and the light-analyzing means.

4. The hydrogen-flame photometric analyzer for a thin-layer chromatograph according to any one of claims 1 to 3, wherein plural spectroscopic means having different transmission wavelengths are furnished, and the light-analyzing means capable of analyzing an intensity of a resolved light is provided for each of the spectroscopic means.

5. The hydrogen-flame photometric analyzer for a thin-layer chromatograph according to any one of claims 1 to 3, further comprising a prism, and plural light-analyzing means capable of analyzing intensities of light resolved by the prism.

6. A dual analyzer comprising the hydrogen-flame photometric analyzer for a thin-layer chromatograph according to any one of claims 1 to 5 and a hydrogen-flame ionization detector.

7. A method for analyzing a hydrogen-flame photometry for a thin-layer chromatograph, comprising steps of:
sequentially burning analytes separated on a chromatography carrier of a thin-layer chromatography element by a hydrogen flame formed by a hydrogen burner, by moving the thin-layer chromatography element and/or the hydrogen burner at a predetermined speed; and
analyzing an intensity of a light emitted from the hydrogen flame, at a particular wavelength.

8. The method for analyzing a hydrogen-flame photometry for a thin-layer chromatograph according to claim 7, wherein analytes containing hetero-elements-containing compounds are selectively detected.
